# EUROPEAN PATENT APPLICATION

(11) **EP 4 614 769 A1**
(43) Date of publication of application: **10.09.2025**
(21) Application number: 23897630.2
(22) Date of filing: 22.11.2023
(51) Int. Cl.: H02K 1/278, H02K 15/03

(54) **ROTATING ELECTRICAL MACHINE PROTECTION RING, METHOD FOR PRODUCING SAME, ROTATING ELECTRICAL MACHINE, AND ELECTRIC MOBILITY DEVICE**

(30) Priority: 29.11.2022 JP 2022189845
(71) Applicant: Toray Industries, Inc., Tokyo 103-8666 (JP)
(72) Inventor: SUENAGA, Kazumasa, Iyo-gun, Ehime 791-3193 (JP); TAKAIWA, Reo, Iyo-gun, Ehime 791-3193 (JP); MIYAZAKI, Yusuke, Iyo-gun, Ehime 791-3193 (JP); HOSOKAWA, Naofumi, Iyo-gun, Ehime 791-3193 (JP); SANO, Kentaro, Iyo-gun, Ehime 791-3193 (JP)
(74) Representative: Prüfer & Partner mbB Patentanwälte · Rechtsanwälte
(86) International application number: PCT/JP2023/041915
(87) International publication number: WO 2024/116982

(57) **Abstract**

A rotating electrical machine protection ring constructed by winding a tape-like or sheet-like material made of reinforcing fibers impregnated with resin several times in a circular manner to form a cylindrical laminate and molding the cylindrical laminate, wherein at least one slit is formed in a winding end region of an outermost layer of the laminate. There is provided a rotating electrical machine protection ring and a manufacturing method of the rotating electrical machine protection ring, the rotating electrical machine protection ring being constructed by molding a fiber-reinforced composite material that has been wound on an outside of a rotor in a rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

## Description

### Technical Field

The present invention relates to a rotating electrical machine protection ring, a manufacturing method of the rotating electrical machine protection ring, a rotating electrical machine, and electric mobility equipment.

### Background Art

In recent years, to achieve improved performance of a rotating electrical machine, there has been a demand for rotating the rotating electrical machine at a higher speed. Types of the rotating electrical machines include a Surface Permanent Magnet (SPM) type in which a permanent magnet is disposed on an outer circumference side of a rotor and an Internal Permanent Magnet (IPM) type in which a permanent magnet is embedded in a rotor. When the rotating electrical machine is rotated at a high speed, the permanent magnet disposed on the outer circumference may fall off the rotor due to centrifugal force, or the rotor itself may be damaged. In order to prevent destruction of the rotating electrical machine due to the high-speed rotation, Patent Literature 1 describes a sleeve or rotor sleeve placed on an outer periphery of a permanent magnet disposed on an outer circumference side of a rotary member in an SPM type rotating electrical machine in such a way as to cover the permanent magnet, wherein the sleeve or rotor sleeve is a ring-shaped material and obtained by molding a tape-like fiber tow that is formed by putting together a plurality of threadlike fibers being arranged in one direction into a flat shape by using resin.

As the ring-shaped material described above, a fiber-reinforced composite material is used because of its high strength, lightweight, and the like. It is described that a material in which carbon fiber in particular is used as a reinforcing fiber is preferred.

Patent Literature 2 describes a retainer that holds magnets from an outer circumference side, the magnets being arranged in such a way as to surround an outer circumference of a rotation shaft of a rotor in a rotating electrical machine in an annular fashion as well as a technique in which the retainer is constructed by winding a fiber tow several times in a circular manner to be stacked, the fiber tow being formed by putting together a plurality of fibers into a tape-like shape, and bonding the fiber tow integrally with resin serving as a matrix, and delamination of the fiber tow in a winding end portion is prevented by cutting the fiber tow at a winding end in a substantially V shape.

### Citation List

### Patent Literature

Patent Literature 1: JP 2019-71763 A
Patent Literature 2: JP 2019-110622 A

### Summary of Invention

### Technical Problem

In the invention disclosed in Patent Literature 1, a strong tension is applied to the aforementioned sleeve or rotor sleeve (ring) due to centrifugal force caused by the high-speed rotation of the rotating electrical machine, and in addition, the material constituting the winding end portion of the ring constructed by molding the tape-like fiber tow that has been wound is delaminated from other portions, resulting in destruction of the ring and causing a problem of reduced strength.

In the invention disclosed in Patent Literature 2, since stress is concentrated in a distal end portion that has been cut in a V shape, an effect of preventing the delamination in the winding end portion is not satisfactory.

In the present invention, the ring-shaped material that may be used for protecting the rotor of the rotating electrical machine is referred to as a rotating electrical machine protection ring.

It is an object of the present invention to remedy the drawback of the conventional art and provide a rotating electrical machine protection ring, a manufacturing method of the rotating electrical machine protection ring, a rotating electrical machine, and electric mobility equipment, the rotating electrical machine protection ring being constructed by molding a fiber-reinforced composite material that has been wound on an outside of a rotor in the rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

### Solution to Problem

To solve the problem described above, the present invention includes the following configurations:
(1) A rotating electrical machine protection ring constructed by winding a tape-like or sheet-like material made of reinforcing fibers impregnated with resin several times in a circular manner to form a cylindrical laminate and molding the cylindrical laminate, wherein at least one slit is formed in a winding end region of an outermost layer of the laminate.
(2) The rotating electrical machine protection ring according to (1), wherein the slit is formed across a plurality of layers from the outermost layer to a layer on an inner circumference side of the laminate at a position where the slit is formed.
(3) A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein at least one slit is formed in a winding end region of an outermost layer of the laminate by bringing a tool having at least one blade mounted into contact with the laminate in the winding end region..
(4) A rotating electrical machine including the rotating electrical machine protection ring according to (1) or (2), wherein a single output of the rotating electrical machine is 200 kW or more.
(5) A rotating electrical machine including the rotating electrical machine protection ring according to (1) or (2), wherein a single output density of the rotating electrical machine is 6 kW/kg or more.
(6) Electric mobility equipment including the rotating electrical machine according to (4) or (5). Advantageous Effects of Invention

The rotating electrical machine protection ring according to the present invention prevents, when used as a ring for preventing destruction of a rotor caused by high-speed rotation of the rotating electrical machine, delamination in a winding end portion of the outermost layer of the ring while the rotating electrical machine is operating, thus enabling the rotating electrical machine to rotate at a higher speed.

### Brief Description of Drawings

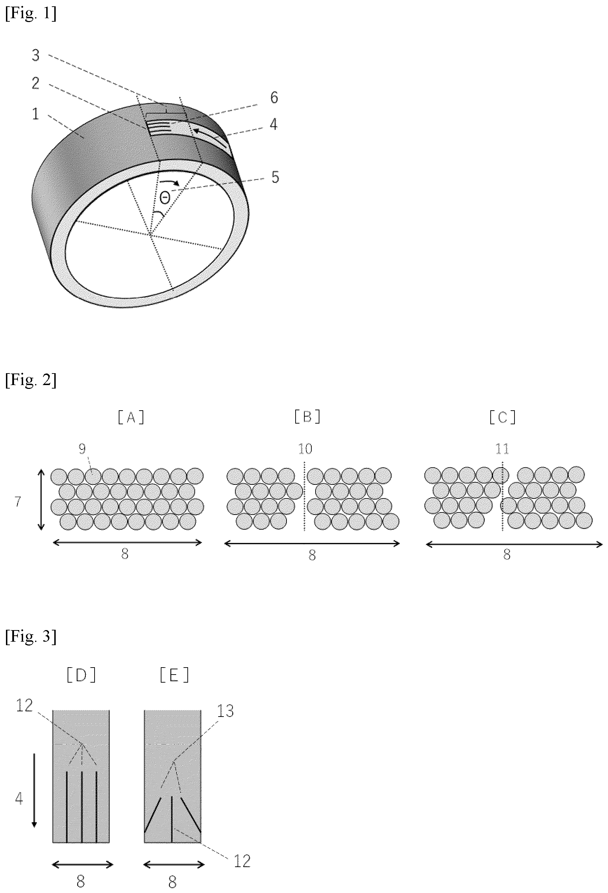

Fig. 1 is a view of a laminate according to a specific embodiment of the present invention in which a winding end region of an outermost layer is illustrated.
Fig. 2 is a set of sectional views of the laminate according to the specific embodiment of the present invention at a winding end: Fig. 2A is a sectional view of the laminate at the winding end in which no slit is formed; Fig. 2B is a sectional view of the laminate at the winding end in which a slit is formed and illustrates an aspect in which there is an area where no fiber exists in a thickness direction; and Fig. 2C is a sectional view of the laminate at the winding end in which a slit is formed and illustrates an aspect in which there is not an area where no fiber exists in the thickness direction.
Fig. 3 is a set of plan views of the laminate according to the specific embodiment of the present invention in the winding end region: Fig. 3D is a plan view of the laminate in the winding end region in which slits that originate from the winding end are formed; and Fig. 3E is a plan view of the laminate in the winding end region in which slits that do not originate from the winding end are included.

### Description of Embodiments

Described below are mainly a configuration of a rotating electrical machine protection ring according to the present invention as described above and a manufacturing method of the rotating electrical machine protection ring.

### (A configuration of the rotating electrical machine protection ring)

The rotating electrical machine protection ring according to the present invention is constructed by winding a tape-like or sheet-like material made of reinforcing fibers impregnated with resin several times in a circular manner to form a cylindrical laminate and molding the cylindrical laminate. The tape-like or sheet-like material may be wound continuously from start to finish or may be wound intermittently in several batches. In the present disclosure, the term "laminate" may refer to an object obtained after molding the material that has been wound and stacked or an object formed during a manufacturing process that is before molding the material that has been wound and stacked.

The reinforcing fiber used for the fiber-reinforced composite material described above is not particularly limited, and glass fiber, carbon fiber, aramid fiber, boron fiber, alumina fiber, silicon carbide fiber, or the like may be used. Two types or more of these fibers may be used in combination. Carbon fiber is preferably used since it enables a lightweight and high stiffness fiber-reinforced composite material to be obtained.

A fiber diameter of the reinforcing fiber used for the aforementioned fiber-reinforced composite material is not particularly limited, but the fiber diameter is preferably 10 µm or less, more preferably 8 µm or less, and even more preferably 6 µm or less, and the fiber having the fiber diameter of 4.5 µm or more may be used.

The fiber diameter of the aforementioned reinforcing fiber is measured as follows. Mass per unit length Af (g/m) and specific gravity Bf (g/cm³) are determined for multiple reinforcing fibers to be measured. Using the obtained values of Af and Bf and the number of fibers Cf in the reinforcing fibers to be measured, the fiber diameter of the reinforcing fibers (µm) is calculated according to the following equation.

The fiber diameter of the reinforcing fibers (µm) = ((Af/Bf/Cf)/π)^{(1/2)} × 2 × 10³

The resin used for the aforementioned fiber-reinforced composite material is not particularly limited, and thermosetting resin such as epoxy resin, unsaturated polyester resin, phenol resin, vinylester resin, or cyanate ester resin or thermoplastic resin such as polyaryletherketone resin, polyether ether ketone resin, polyether ketone resin, polyetherimide resin, polyphenylene sulfide resin, polyether sulfone resin, polyamide resin, or polycarbonate resin may be used. Two types or more of these resins may be used in combination.

The rotating electrical machine protection ring according to the present invention is composed of a laminate formed by winding a tape-like or sheet-like material made of reinforcing fibers impregnated with resin several times in a circular manner.

As the tape-like or sheet-like material, towpreg, prepreg, or a slit tape in which reinforcing fibers are impregnated with resin in advance may be used, or a material that is formed by means of a technique such as a filament winding by winding reinforcing fibers impregnated on the spot with resin in a circular manner may be used. The slit tape is a type of tape-like material and created by cutting a material in which reinforcing fibers are impregnated with resin in advance into a tape-like shape having a specified width. In the present invention, when a slit tape is used as the tape-like material, a slit being an incision is formed in a winding end region of the laminate formed by winding the slit tape.

The width of the tape-like or sheet-like material is not particularly limited, however, when a material having a width of 1 mm to 100 mm is used, formation of a laminate by winding the material becomes easier, and this is preferable. Tape-like materials and sheet-like materials cannot be always clearly distinguished. For example, when the material has a width of 100 mm, the material may be assumed to be a tape-like material or a sheet-like material. In contrast, when the material has a width of 1 mm to 30 mm, the material may be usually assumed to be a tape-like material.

In the present invention, one or more slits are formed in the winding end region of an outermost layer of the laminate described above.

Assuming that a line connecting a winding end 2 and a center of a circle, the circle being recognized in a plan view in which the cylindrically shaped laminate according to the present invention is viewed in an axial direction as illustrated in Fig. 1, is an initial line (0°) and Θ is an angle determined relative to the initial line in a direction opposite to a direction of winding the tape-like or sheet-like material, a winding end region 3 of the outermost layer means a circumferential region for which Θ is in a range of 0° to 30° (see Fig. 1).

The winding end 2 is as described above, and more specifically, it is an end of the outermost layer of the laminate formed by winding the tape-like or sheet-like material.

A cross section of the laminate at the winding end 2 preferably has a substantially quadrangular shape as illustrated in Fig. 2A, and a portion of the reinforcing fiber preferably does not protrude from the substantially quadrangular shape.

The term "slit" refers to an incision that is physically formed in the winding end region of the rotating electrical machine protection ring. The winding end region of the rotating electrical machine protection ring needs to be partially cut by the slit, and a region (usually having an elongated shape) formed by the slit preferably has at least a portion in a width direction where no reinforcing fiber exists in a thickness direction (see Fig. 2B).

In the present invention, although a direction of the slit to be formed is not limited, the direction is preferably substantially parallel to the direction of winding the tape-like or sheet-like material. The phrase "substantially parallel" used here does not necessarily mean physically "accurately parallel", and some degree of inclination is allowed relative to a parallel state. The inclination of the direction is preferably 30° or less relative to the parallel state in which the direction is parallel to the direction of winding the tape-like or sheet-like material, more preferably 20° or less, even more preferably 10° or less, and further more preferably 5° or less.

A length of the slit, an origin of the slit, and an end point of the slit are not particularly limited, but the length of the slit is preferably a length that can be formed in a region for which Θ is within the range of 30° or less from the winding end (Θ = 0°) as described above. In other words, the origin or the end point of the slit according to the present invention is preferably located at the winding end, and the length of the slit is preferably 0.1 mm or more in a circumferential length direction of the outermost layer, more preferably 1 mm or more, and even more preferably 5 mm or more, and at the same time, preferably 40 mm or less. With the slit located at the preferred position as described above, propagation of delamination may be prevented.

In the present invention, the number of the slits to be formed in the winding end region is preferably 10 or less, more preferably seven or less, and even more preferably five or less. By limiting the number of the slits to the preferred number described above or less, propagation of delamination in an end portion may be prevented. When the slit is branched, the slit is assumed as one including the branch.

Furthermore, when a plurality of slits is provided, an interval between the slits is not particularly limited, but it is preferred to provide slits at even intervals in a direction substantially parallel to the direction of winding the tape-like or sheet-like material since the effect of preventing delamination in the rotating electrical machine protection ring may be further improved.

In addition, it is preferred that the slit is formed not only in the outermost layer that includes the winding end of the laminate, but also formed across a plurality of layers from the outermost layer to a layer on an inner circumference side of the laminate at a position where the slit is formed. More preferably, the slit is formed from the outermost layer to one or more layers and five or fewer layers on the inner circumference side of the laminate, even more preferably the slit is formed from the outermost layer to one or more layers and four or fewer layers on the inner circumference side of the laminate, and further more preferably the slit is formed from the outermost layer to one or more layers and three or fewer layers on the inner circumference side of the laminate. When the slit is formed from the outermost layer to one layer on the inner circumference side of the laminate, the slit is formed across a plurality of layers since the slit is formed in the outermost layer being one layer and the layer on the inner circumference side being one layer.

The rotating electrical machine protection ring according to the present invention preferably has an inner diameter of 1 cm to 25 cm. In addition, the thickness of the ring is preferably 0.1 mm to 5.0 mm. When the inner diameter and the thickness of the rotating electrical machine protection ring are in the corresponding preferred range described above, the effect of preventing delamination in the rotating electrical machine protection ring may be further improved.

### (A construction method of the rotating electrical machine protection ring)

In the present invention, formation of the laminate using the tape-like or sheet-like material is usually performed by winding the tape-like or sheet-like material around a columnar material.

As the columnar material, a core material such as a mandrel may be used, or a member to which the rotating electrical machine protection ring is ultimately tightly fit, such as the rotor of the rotating electrical machine, may be used.

Formation of the laminate may be performed by winding the tape-like or sheet-like material repeatedly in a direction that has an angle of 0° relative to a circumferential direction of the columnar material being a reference direction. In other words, the tape-like or sheet-like material may be wound repeatedly on a position having the same height as the columnar material. Alternatively, the tape-like or sheet-like material may be wound helically in a direction that has a different angle relative to the aforementioned circumferential direction serving as the reference direction.

When thermosetting resin is used as the resin constituting the material, the rotating electrical machine protection ring can be obtained by means of a technique such as autoclave molding or tape wrapping molding by applying heat to and pressure on the laminate and curing the laminate.

When thermoplastic resin is used as the material, the rotating electrical machine protection ring can be obtained concurrently with formation of the laminate by welding the material by means of application of heat to the material using a laser or the like while winding the material during formation of the laminate.

The slit may be created in the winding end region of the tape-like or sheet-like material by using a cutting tool such as scissors or a cutter in advance before winding the tape-like or sheet-like material and forming the laminate or while winding the material and forming the laminate, or after forming the laminate. Alternatively, the slit may be created by using an air cutter, a router, or the like after the rotating electrical machine protection ring is obtained.

When the slit is created in the winding end region from above the laminate by using the cutting tool such as a cutter after forming the laminate, the slit may be formed, as described above, from the outermost layer that includes the winding end region of the laminate to at least one layer on the inner circumference side of the laminate at a position where the slit is formed.

With the slit formed in this manner, a fiber may be shoved by the cutting tool that has been used in creating the slit from an outer layer into an inner layer and penetrate into the inner layer, which causes the outer layer and the inner layer to be connected to each other with their fibers and causes the fibers to be entangled with each other. Therefore, the slit formed in this manner is preferable since the effect of preventing delamination in the rotating electrical machine protection ring may be further improved.

A form of the cutting tool used in creating the slit is not particularly limited, but it is preferred to prepare a tool having at least one blade mounted in advance and create the slit by pressing the tool to the laminate since the slit may be efficiently created.

A rotating electrical machine according to the present invention includes the rotating electrical machine protection ring that has been described above, and more specifically, the rotating electrical machine is constructed of the rotating electrical machine protection ring and a rotor. In addition, the present invention can provide, by using the rotating electrical machine, electric mobility equipment including the rotating electrical machine.

The electric mobility equipment referred to herein includes, but is not limited to, electric vehicles, electric aircraft, and electric ships, and may be any mobility equipment driven by the rotating electrical machine. The present technique improves the output or output density of the rotating electrical machine and enables the rotating electrical machine to be lightweight and downsized, thus it can be expected that the mobility equipment has an improved traveling distance or greater degrees of freedom in the design. A single output, that is, an output that a single rotating electrical machine can individually generate is preferably 200 kW or more, more preferably 300 kW or more, and the rotating electrical machine having an output of 2000 kW or less may be used. A single output density, that is, a density of the output that a single rotating electrical machine can individually generate is preferably 6 kW/kg or more, more preferably 8 kW/kg or more, and the rotating electrical machine having an output density of 30 kW or less may be used.

### Examples

Specific examples of the construction method of the rotating electrical machine protection ring according to the present invention are described below.

Peeling tests for the laminate were performed in the winding end portion in a manner as described below, and evaluations were made.

### *Peeling test in the winding end portion

The rotating electrical machine protection rings obtained in each of Examples and Comparative Example were used as test specimens, and Naval Ordnance Laboratory Ring Tests (ASTM D2290 (2019)) were performed by using an Instron Universal Testing Machine (manufactured by Instron corporation) with a diameter of a fixture to be placed inside an inner periphery of the test specimen being 130 mm and a crosshead speed being 2.5 mm/min. It was evaluated that delamination in the winding end portion was prevented when the rotating electrical machine protection ring was fractured without delamination found in the winding end portion as a load applied on the ring was increased, and the load applied when delamination occurred was determined as the load at the time of the delamination. The load applied when the ring fractured was determined as the load at the time of the fracture of the ring. When it was found that even a portion of the winding end portion was delaminated from the inner layer, it was determined that delamination had occurred.

### (Example 1)

As the columnar material for forming the laminate, a metallic mandrel having a diameter of 150 mm and a height of 15 mm was used. As the tape-like material constituting the laminate, a plurality of tows, each of the tows consisting of 12000 carbon fibers each having a fiber diameter of 5µm, were aligned and formed into unidirectionally aligned reinforcing fibers in such a way that the fibers have a weight per unit area of 100 g/m², and an epoxy resin composition composed of bisphenol A type epoxy, dicyandiamide (serving as a curing agent), diuron (serving as a curing accelerator), and polyvinyl formal (serving as a viscosity modifier) was impregnated into the fibers, thereby obtaining a sheet-like unidirectional prepreg having resin content of 30% by mass, and the prepreg was cut in such a way as to have a width of 15 mm in a width direction of the fibers aligned in one direction, and tape-like prepregs were prepared.

After the tape-like prepregs that had been cut were attached to the mandrel in such a way that the longitudinal direction of the fibers was perpendicular to an axial direction of the mandrel, the prepregs were wound around the mandrel while applying tension until the thickness became 1 mm, thus the laminate was formed.

Four slits were created at intervals of 3 mm with the winding end of the outermost layer of the laminate that had been formed as the origin by pressing a cutter knife to the laminate in such a way that the four slits were oriented in the same direction as the longitudinal direction of the fibers with a length of 15 mm in the circumferential length direction of the outermost layer. It was confirmed from a depth of insertion of the cutter knife that the slit had been created into the fifth inner layer counting from the outermost layer.

After the slits were created, the laminate was covered with a bagging film, and by pressurizing, heating and curing the laminate using an autoclave, the rotating electrical machine protection ring was constructed.

### (Example 2)

As the columnar material for forming the laminate, a metallic mandrel having a diameter of 130 mm and a height of 15 mm was used. A sheet-like unidirectional prepreg was obtained under the same condition as that in Example 1, and the prepreg was cut in such a way as to have a width of 7 mm in the width direction of the fibers, and tape-like prepregs were prepared.

After the tape-like prepregs that had been cut were attached to the mandrel in such a way that the longitudinal direction of the fibers was perpendicular to the axial direction of the mandrel, the prepregs were wound helically around the mandrel while applying tension until the thickness became 1 mm, thus the laminate was formed.

Two slits having a substantially quadrangular shape with a width of 0.6 mm were created only in the outermost layer of the laminate that had been formed at an interval of 2.3 mm with the winding end as the origin by using scissors in such a way that both two slits were oriented in the same direction as the longitudinal direction of the fibers with a length of 13.6 mm in the circumferential length direction of the outermost layer.

After the slits were created, the laminate was covered with a bagging film, and by pressurizing, heating and curing the laminate using an autoclave, the rotating electrical machine protection ring was constructed.

A peeling test was performed in the winding end portion for the rotating electrical machine protection ring that had been created by the method as described above, and the effect of preventing delamination was confirmed. The results are illustrated in Fig. 1.

### (Comparative Example 1)

Under the same condition as that in Example 2 except that the slit was not formed, the rotating electrical machine protection ring was obtained.

A peeling test was performed in the winding end portion for the rotating electrical machine protection ring that had been created by the method as described above, and the effect of preventing delamination was not confirmed. The result is illustrated in Fig. 1.

**[Table 1]**

| | Example 1 | Example 2 | Comparative Example 1 |
|---|---|---|---|
| Numbers of slit (Number) | 4 | 2 | 0 |
| Numbers of Layer where the slits exist | 5 | 1 | 1 |
| Load at the time of delamination at the edge (kN) | ― | 14.9 | 11.0 |

### Industrial Applicability

The rotating electrical machine protection ring according to the present invention may be placed on an outside of the rotor of the rotating electrical machine such as a generator or an electric motor, and the rotating electrical machine protection ring may be used for protecting the rotor in which a magnet is contained from destruction caused by centrifugal force while the rotating electrical machine is operating. The present invention can provide a rotating electrical machine constructed of the rotating electrical machine protection ring and the rotor. In addition, the present invention can provide electric mobility equipment in which the rotating electrical machine is used.

For example, the rotating electrical machine protection ring may be preferably applied to the SPM type electric motor that has been referred to, and may prevent a permanent magnet from falling off a rotor due to centrifugal force while the rotating electrical machine is operating, thus enabling the rotating electrical machine to rotate at a high speed. In addition, the rotating electrical machine protection ring may be preferably applied to the IPM type electric motor that has been referred to, and may prevent an electrical steel sheet from being destroyed due to centrifugal force while the rotating electrical machine is operating, thus enabling the rotating electrical machine to rotate at a high speed.

### Reference Signs List

- 1: laminate
- 2: winding end
- 3: winding end region
- 4: winding direction
- 5: angle Θ determined, assuming that a radius to the winding end 2 of a circle in a plan view of the ring is an initial line (0°), relative to the initial line in a direction opposite to the winding direction 4 of the material
- 6: slit
- 7: thickness direction of the tape-like or sheet-like material
- 8: width direction of the tape-like or sheet-like material
- 9: fiber that constitutes the tape-like or sheet-like material
- 10: slit in which no fiber exists in the thickness direction 7 of the tape-like or sheet-like material
- 11: slit in which a fiber exists in the thickness direction 7 of the tape-like or sheet-like material
- 12: slit originating from the winding end 2
- 13: slit not originating from the winding end 2

## Claims

1. A rotating electrical machine protection ring constructed by winding a tape-like or sheet-like material made of reinforcing fibers impregnated with resin several times in a circular manner to form a cylindrical laminate and molding the cylindrical laminate, wherein at least one slit is formed in a winding end region of an outermost layer of the laminate.

2. The rotating electrical machine protection ring according to claim 1, wherein the slit is formed across a plurality of layers from the outermost layer to a layer on an inner circumference side of the laminate at a position where the slit is formed.

3. A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein at least one slit is formed in a winding end region of an outermost layer of the laminate by bringing a tool having at least one blade mounted into contact with the laminate in the winding end region.

4. A rotating electrical machine including the rotating electrical machine protection ring according to claim 1 or 2, wherein a single output of the rotating electrical machine is 200 kW or more.

5. A rotating electrical machine including the rotating electrical machine protection ring according to claim 1 or 2, wherein a single output density of the rotating electrical machine is 6 kW/kg or more.

6. Electric mobility equipment including the rotating electrical machine according to claim 4 or 5.
